# EUROPEAN PATENT SPECIFICATION

(11) **EP 3 342 700 B1**
(45) Date of publication and mention of the grant of the patent: **22.04.2020**
(21) Application number: 16382656.3
(22) Date of filing: 27.12.2016
(51) Int. Cl.: B64C 1/10

(54) **REAR PRESSURE BULKHEAD**
HECKDRUCKSCHOTT
CLOISON DE PRESSURISATION ARRIÈRE

(43) Date of publication of application: 04.07.2018
(73) Proprietor: Atos Spain S.A., 28037 Madrid (ES)
(72) Inventor: GONZÁLEZ, Juan Miguel, 28025 Madrid (ES); PARPAL, Nicolás, 28028 Madrid (ES); VILLACIEROS, Luis, 28028 Madrid (ES)
(74) Representative: Vigand, Régis Louis Michel

(56) References cited:
- EP-A1- 3 095 689
- EP-A2- 2 700 573
- DE-A1-102006 029 231
- US-A1- 2008 179 459
- US-A1- 2016 264 231

## Description

### FIELD OF THE INVENTION

The invention relates to the field of rear pressure bulkheads in aircrafts and especially in airplanes.

### BACKGROUND OF THE INVENTION

An aircraft rear pressure bulkhead is an airtight wall separating the cabin of the aircraft from the tail of the aircraft. An aircraft rear pressure bulkhead aims at sealing the rear part of the aircraft in order to maintain the cabin pressure in the aircraft.

According to a first prior art, it is known a curved rear pressure bulkhead at the rear of an airplane. This curved rear pressure bulkhead is robust with a good resistance to air pressure coming from cabin inside and presents a reduced global weight. Besides, the small angle made by the external periphery of the curved rear pressure bulkhead with the mean surface of the airplane fuselage to which it is attached leads to a better stress distribution on the whole of the curved rear pressure bulkhead and as well a better load transfer to the skin of the fuselage. However, this curved rear pressure bulkhead takes a substantial volume to be implemented at the rear of the airplane.

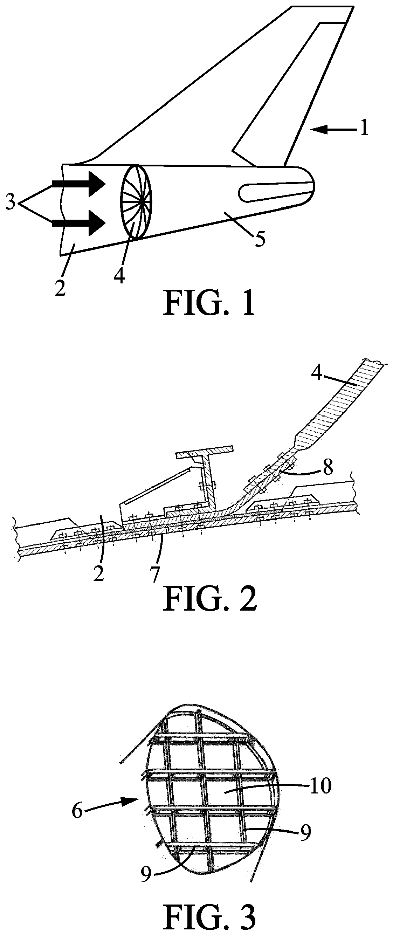

Such a first prior art is for example represented on figures 1 and 2. On figure 1, there is an airplane 1 comprising a cabin 2 and a tail 5 separated from each other by a curved rear pressure bulkhead 4 presenting resistance to air pressure 3 coming from the inside of cabin 2. The curved rear pressure bulkhead 4 is attached by attachments 8 to the fuselage wall 7, making an angle which is quite small, thereby better load distributing from on the whole surface of the curved rear pressure bulkhead 4 to the skin of the fuselage.

According to a second prior art, it is known a flat rear pressure bulkhead at the rear of an airplane. To make this flat rear pressure bulkhead robust enough, it comprises thick horizontal and vertical reinforcement beams crossed with one another. However, these thick horizontal and vertical reinforcement beams present two drawbacks. First, these thick reinforcement bars increase notably the global weight of this flat rear pressure bulkhead. Second, these thick reinforcement bars notably increase the thickness of this rear pressure bulkhead, thereby taking a non-negligible volume to be implemented at the rear of the airplane. Moreover, air pressure distribution into the flat rear pressure bulkhead implies a worst stress distribution in it.

Such a second prior art is for example represented on figure 3. On figure 3, there is a flat panel 6 supported by thick horizontal and vertical reinforcements beams 9, crossing with one another, making a waffle bulkhead pattern of the flat panel 6 presenting about a dozen of squares 10. The thick reinforcement beams 9 present the drawbacks to increase simultaneously the weight, the thickness and the volume of this global flat rear pressure bulkhead 4.

US2008/0179459 and EP3095688 disclose each a pressure bulkhead for aircraft.

### SUMMARY OF THE INVENTION

The object of the present invention is to alleviate at least partly the above mentioned drawbacks.

More particularly, the invention aims at providing for a rear pressure bulkhead which will go towards a first compromise which simultaneously allows for gaining some place as compared to a classical curved rear pressure bulkhead according to first prior art while keeping a comparable resistance to cabin air pressure as this classical curved rear pressure bulkhead, and towards a second compromise which allows for keeping a comparable resistance to cabin air pressure as the flat rear pressure bulkhead according to second prior art while presenting reduced weight and volume as compared to this flat rear pressure bulkhead.

The invention proposes a rear pressure bulkhead which will present an improved global compromise between its robustness, i.e. resistance to cabin air pressure, its weight and its filled volume, i.e. especially its thickness corresponding to volume in the longitudinal direction of the aircraft or the airplane.

The invention proposes on the one hand to make a flat rear pressure bulkhead in order to give more space to passengers in cabin and for example to gain thereby at least one passenger row of seats in the cabin in case of an airplane, while on the other hand keeping a good compromise between its robustness and its weight and its thickness, by modifying its structure to make it rather robust, light and compact.

This object is achieved with an aircraft flat rear pressure bulkhead, having a layered stacking including: an airtight membrane, a honeycombed reinforcement grid, an interface in between distributing grid strain over membrane surface.

This object is also achieved with an aircraft flat rear pressure bulkhead, including: a honeycombed reinforcement grid, airtight membranes respectively filling honeycombs of said honeycombed reinforcement grid, said honeycombs preferably being polygonal honeycombs with at least six sides, and more preferably being hexagonal honeycombs.

Preferred embodiments comprise one or more of the following features, which can be taken separately or together, either in partial combination or in full combination, associated to one or the other of previous objects of the invention.

Preferably, said honeycombed reinforcement grid comprises at least 40 honeycombs, preferably at least 50 honeycombs. The number of noneycombs may also depend on the size of the aircraft and the difference the pressure between the atmosphere and the cabin. Thus, increasing the number of the reinforcements cells in the lattice of the grid increases grid resistance to air pressure. Besides, making numerous reinforcements cells in the lattice of the grid allows for decreasing the individual resistance of each single cell thereby helping keeping to a limited and reasonable amount the material quantity as well as the global weight of the flat rear pressure bulkhead. Thus, the compromise between increased robustness and limited weight is improved.

Preferably, a largest dimension of most of, preferably of all of, honeycombs of said honeycombed reinforcement grid, is less than 500mm, preferably less than 450mm. Thus, having a small dimension of each reinforcement cell allows for a good support of most of the surface of the airtight membrane, thereby again increasing resistance to cabin air pressure while keeping limited the global weight of the flat rear pressure bulkhead.

Preferably, most of, preferably of all of, honeycombs of said honeycombed reinforcement grid, are polygonal honeycombs with at least six sides, are preferably hexagonal honeycombs. Thus, the ratio between the intrinsic resistance of the reinforcement grid and its weight is improved, simply because of the type of geometrical pattern used while keeping roughly the same quantity of material to make this reinforcement grid. Thus, again, the compromise between robustness and weight of the flat rear pressure bulkhead is improved.

Preferably, honeycomb walls of said honeycombed reinforcement grid are orthogonal to membrane mean surface. Thus, their strength to support the airtight membrane is maximal, for a given amount of material hence for a given weight. Once more, the compromise between robustness and weight of the flat rear pressure bulkhead is improved.

Preferably, said membrane is flat and parallel to mean surface of flat rear pressure bulkhead. Thus, the occupied volume of the membrane is reduced, and hence the global volume of the flat rear pressure bulkhead is reduced too.

Preferably, said interface comprises, preferably is constituted of, flanges distributing grid strain over membrane surface. This happens to be practically as robust as reinforcement beams, provided, there is a sufficient density of such flanges all over the surface of the membrane, linked to a sufficient density of reinforcement cells, and this can be achieved with a reduced amount of material, and hence with a reduced weight, since these flanges are smaller structures than reinforcement bars. Once more, the compromise between robustness and weight of the flat rear pressure bulkhead is improved.

Preferably, said reinforcement grid also comprises, on its rear face opposite to its front face contacting said interface, another layer of flanges reinforcing honeycombs. Thus, robustness of grid is still increased, therefore global robustness of flat rear pressure bulkhead is also increased.

Preferably, said flanges are flat and parallel to membrane mean surface. Thus, their support effect with respect to membrane is improved. The support effect helps interface better distributing grid strain over membrane surface. The flanges with this orientation can present a limited extension, while keeping a good support effect with respect to membrane. This type of flanges will thereby require a limited amount of material, thus again reducing global weight of flat rear pressure bulkhead.

Preferably, said flanges are tubes with axis parallel to membrane mean surface. The compromise between robustness and weight of this reinforcement grid and interface is improved, but the support effect with respect to membrane is more limited because of the reduced surface of interface being directly in contact with membrane.

Preferably, said interface and said honeycombed reinforcement grid are manufactured in one single piece. This makes the resulting one piece structure comprising grid and interface more robust, with no added material therefore no added weight.

Preferably, a cross section of said one piece layer is T shaped or I shaped or Y shaped. T shaped cross section appears to be the better, at least with respect to support effect provided by interface to membrane.

Preferably, said flat rear pressure bulkhead is a disk. This allows this flat rear pressure bulkhead to fill completely the available space within the rear of the aircraft and to be directly attached to fuselage wall or at least in the vicinity of fuselage wall.

Preferably, said layered stacking is encircled by a circular ring to be fixed to aircraft fuselage attachments. This circular ring first improves global robustness of flat rear pressure bulkhead and second makes it easier for implementation.

Preferably, in an embodiment, said membrane is a plastic membrane. This allows for reducing somewhat more the global weight of the flat rear pressure bulkhead. This can be done because of the high robustness of the new structure of the layer staking forming the flat rear pressure bulkhead, and especially because of the high support effect of this new structure with respect to the membrane.

Preferably, in another embodiment, said membrane is a metallic membrane. This allows for increasing somewhat more the global robustness of the flat rear pressure bulkhead.

Preferably, said flat rear pressure bulkhead largest thickness is less than 400mm. The layer stacking structure allows for such a limited thickness while not giving up robustness.

Preferably, said airtight membranes are dome shaped. Thus, their specific shape improves robustness and resistance to cabin air pressure while not deteriorating global weight of flat rear pressure bulkhead.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows a curved rear pressure bulkhead in an airplane, according to a first prior art.
Fig. 2 shows specific attachment of the curved rear pressure bulkhead of figure 1 to the fuselage wall of the airplane, according to this first prior art.
Fig. 3 shows a flat rear pressure bulkhead in an airplane, according to a second prior art.
Fig. 4 shows the location of a flat rear pressure bulkhead in an airplane according to an embodiment of the invention, as compared to the location of a curved rear pressure bulkhead in an airplane according to previous first prior art.
Fig. 5 shows a side view of an example of an aircraft flat rear pressure bulkhead according to an embodiment of the invention.
Fig. 6A shows a perspective view of an example of the structure of the layer stacking of an aircraft flat rear pressure bulkhead according to a first embodiment of the invention, showing interface and reinforcement grid made in one piece.
Fig. 6B shows a perspective view of a detail of figure 6A.
Fig. 7A shows a perspective view of an example of the structure of the layer stacking of an aircraft flat rear pressure bulkhead according to a second embodiment of the invention, showing interface and reinforcement grid made in one piece.
Fig. 7B shows a perspective view of a detail of figure 7A.
Fig. 8 shows a perspective view of an example of the structure of the layer stacking of an aircraft flat rear pressure bulkhead according to a third embodiment of the invention, showing interface and reinforcement grid made in one piece.
Fig. 9A shows a perspective view of an example of the structure of the layer stacking of an aircraft flat rear pressure bulkhead according to a fourth embodiment of the invention, showing interface and reinforcement grid made in one piece.
Fig. 9B shows a perspective view of a detail of figure 9A.

### DETAILED DESCRIPTION OF THE INVENTION

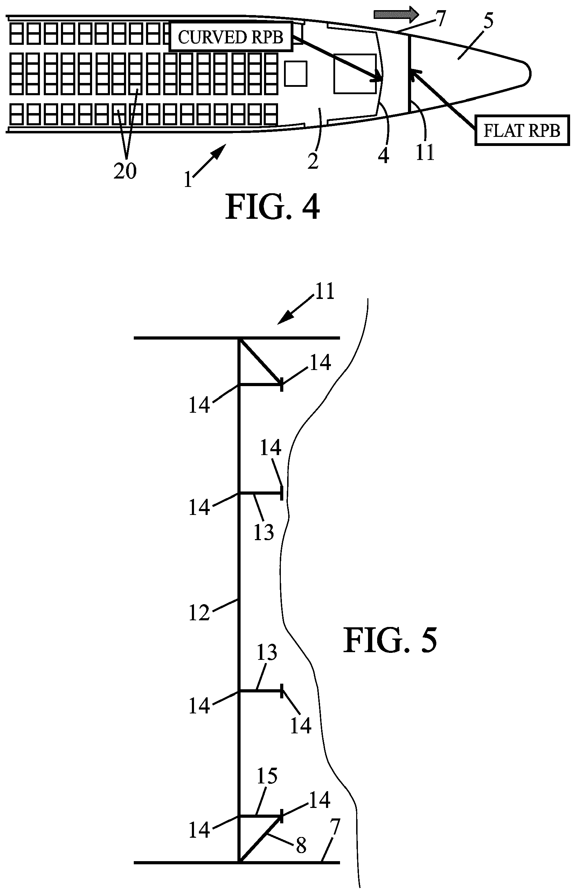

Fig. 4 shows the location of a flat rear pressure bulkhead in an airplane according to an embodiment of the invention, as compared to the location of a curved rear pressure bulkhead in an airplane according to previous first prior art.

On figure 4, in a classical configuration according to first prior art, there is an airplane 1 comprising a cabin 2 filled with passengers seats 20 and a tail 5 separated from each other by a curved rear pressure bulkhead 4 presenting resistance to air pressure coming from the inside of cabin 2. The curved rear pressure bulkhead 4 is attached to the fuselage wall 7.

On figure 4, in a new configuration according to an embodiment of the invention, there is an airplane 1 comprising a cabin 2 filled with passengers seats 20 and a tail 5 separated from each other by a flat rear pressure bulkhead 11 presenting resistance to air pressure coming from the inside of cabin 2. This flat rear pressure bulkhead 11 replaces the classical curved rear pressure bulkhead 4 according to first prior art. The flat rear pressure bulkhead 11 is attached to the fuselage wall 7. The flat rear pressure bulkhead 11 has been moved towards the rear of the airplane 1, as compared to the curved rear pressure bulkhead 4 of first prior art, in order to gain space for the cabin 2, in order to be able to add at least one row of seats in an airplane 1 of middle size, for example 6 or 8 seats more in a plane comprising about 150 seats, what will roughly increase the revenue of each flight by 5%, at practically no increase of costs.

A preferred flat rear pressure bulkhead 11, for a middle sized airplane as for example A320 Airbus (registered trademark), will preferably present a thickness in the longitudinal direction of the airplane 1 which will be comprised between 350mm and 400mm. This preferred flat rear pressure bulkhead 11 will preferably present a global weight comprised between 100kg and 130kg, with a density between 10kg/m² and 13kg/m², on a global surface of about 10m². The load to be applied on this preferred flat rear pressure bulkhead 11 will be between 0.11 and 0.12 MPa.

Fig. 5 shows a side view of an example of an aircraft flat rear pressure bulkhead according to an embodiment of the invention.

The flat rear pressure bulkhead 11 presents the structure of a layer stacking, successively including, from forward to backward in the longitudinal direction of the airplane or of the aircraft, an airtight membrane 12, a layer of front flanges 14, a layer of orthogonal reinforcement grid 13, a layer of rear flanges 14. The flat rear pressure bulkhead 11 is encircled by a circular ring 15 attached to fuselage wall 7 via attachments 8.

The airtight membrane 12 is made of aluminum or made of plastic, its function is to keep the air pressure in the aircraft cabin. The airtight membrane 12 has the function of keeping an airtight separating wall between cabin and tail in the aircraft.

The layer of orthogonal reinforcement grid 13 is a lattice of reinforcement cells presenting polygonal shapes, preferably hexagonal shapes. Their function is to carry the pressure load coming from the airtight membrane 12, through the front layer of flanges 14, while stiffening the airtight membrane 12, and to transmit this pressure load partly to the rear layer of flanges 14.

The circular ring 15 encircling the layer stacking stiffens this layer stacking while providing for a rigid structure to be attached to fuselage wall, thereby connecting layer stacking to fuselage wall 7.

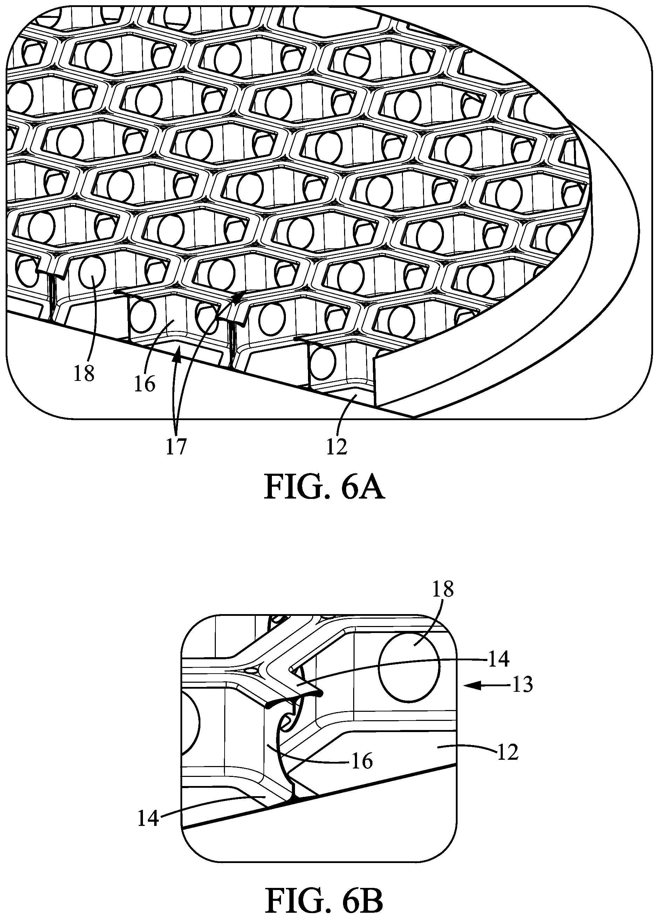

Fig. 6A shows a perspective view of an example of the structure of the layer stacking of an aircraft flat rear pressure bulkhead according to a first embodiment of the invention, showing interface and reinforcement grid made in one piece. Fig. 6B shows a perspective view of a detail of figure 6A.

The reinforcement grid 13 is a lattice of hexagonal reinforcement cells 17 made in one piece with the layer of front flanges 14 on one side and with the layer of rear flanges 14 on the other side. The layer of front flanges 14 makes the interface with the airtight membrane 12. The cross section 16 of this one piece structure is I shaped. One horizontal bar of this I shape provides for distributing the strain of the grid 13 over the surface of the membrane 12. The vertical bar of this I shape, constituting part of the grid 13, provides for carrying the load transmitted by the membrane 12 to the rear layer of flanges 14 which constitutes another part of the grid 13 increasing the inertia of this grid 13. Holes 18 are provided to reduce the weight.

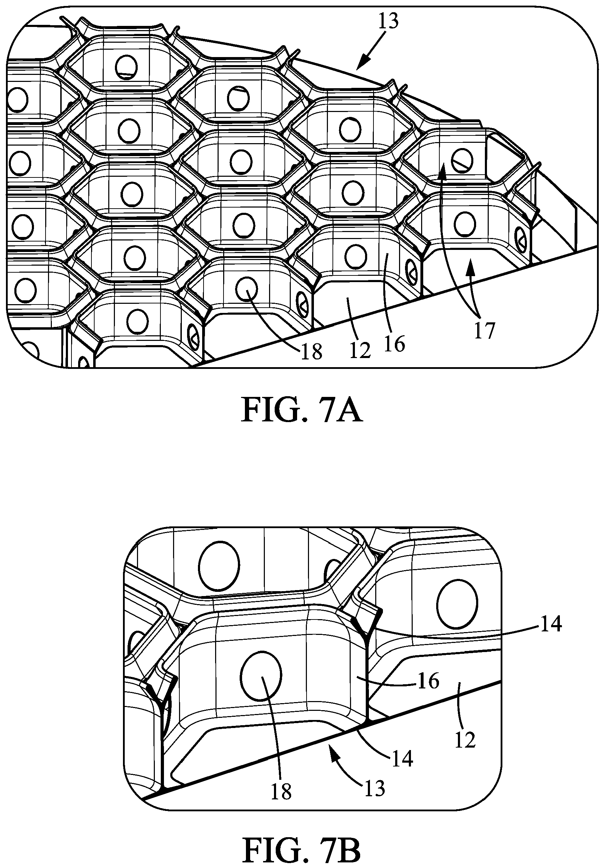

Fig. 7A shows a perspective view of an example of the structure of the layer stacking of an aircraft flat rear pressure bulkhead according to a second embodiment of the invention, showing interface and reinforcement grid made in one piece. Fig. 7B shows a perspective view of a detail of figure 7A.

The reinforcement grid 13 is a lattice of hexagonal reinforcement cells 17 made in one piece with the layer of front flanges 14 on one side and with the layer of rear flanges 14 on the other side. The layer of front flanges 14 makes the interface with the airtight membrane 12. The cross section 16 of this one piece structure is Y shaped on the rear side but remains T shaped on the front side. The horizontal bar of this T shape provides for distributing the strain of the grid 13 over the surface of the membrane 12. The vertical bar of this Y shape, constituting part of the grid 13, provides for carrying the load transmitted by the membrane 12 to the rear layer of flanges 14 which constitutes another part of the grid 13 increasing the inertia of this grid 13. Holes 18 are provided to reduce the weight.

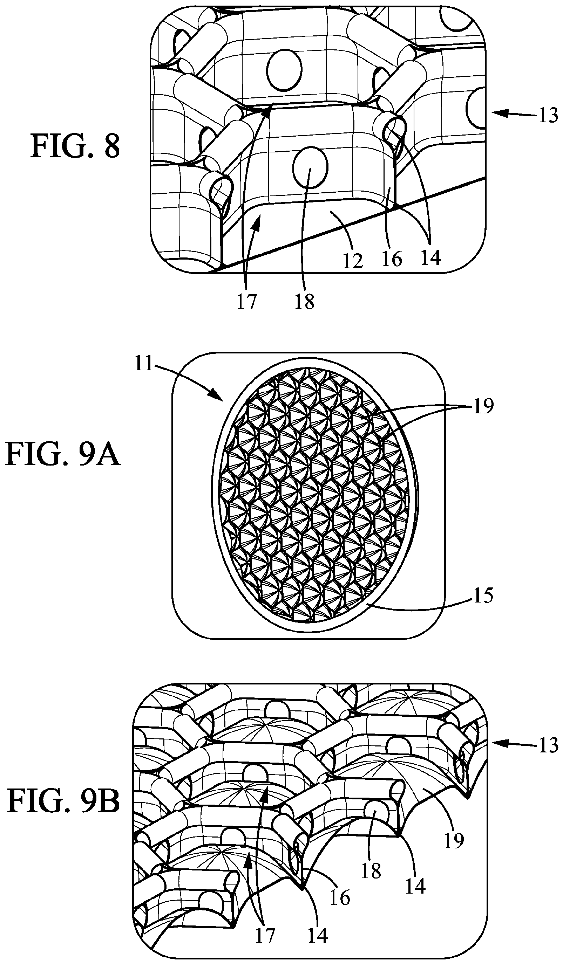

Fig. 8 shows a perspective view of an example of the structure of the layer stacking of an aircraft flat rear pressure bulkhead according to a third embodiment of the invention, showing interface and reinforcement grid made in one piece.

The reinforcement grid 13 is a lattice of hexagonal reinforcement cells 17 made in one piece with the layer of front flanges 14 on one side and with the layer of rear flanges 14 on the other side. The layer of front flanges 14 makes the interface with the airtight membrane 12. The cross section 16 of this one piece structure is tube shaped on the rear side but remains T shaped on the front side. The horizontal bar of this T shape provides for distributing the strain of the grid 13 over the surface of the membrane 12. The vertical bar, constituting part of the grid 13, provides for carrying the load transmitted by the membrane 12 to the rear layer of flanges 14 which are tube shaped, this rear layer of flanges 14 constitutes another part of the grid 13 increasing the inertia of this grid 13. Holes 18 are provided to reduce the weight.

Fig. 9A shows a perspective view of an example of the structure of the layer stacking of an aircraft flat rear pressure bulkhead according to a fourth embodiment of the invention, showing interface and reinforcement grid made in one piece. Fig. 9B shows a perspective view of a detail of figure 9A.

The flat rear pressure bulkhead 11 comprises a lattice of membrane domes 19 encircled by the circular ring 15. The reinforcement grid 13 is a lattice of hexagonal reinforcement cells 17 made in one piece with the layer of front flanges 14 on one side and with the layer of rear flanges 14 on the other side. The layer of front flanges 14 makes the interface with the airtight dome shaped membrane cells which are domes 19. The cross section 16 of this one piece structure is tube shaped on the rear side but is V shaped on the front side. The membrane domes 19 are attached to the tip of this V shaped front flanges 14. The vertical bar, constituting part of the grid 13, provides for carrying the load transmitted by the membrane domes 19 to the rear layer of flanges 14 which are tube shaped, this rear layer of flanges 14 constitutes another part of the grid 13 increasing the inertia of this grid 13. Holes 18 are provided to reduce the weight.

The invention has been described with reference to preferred embodiments. However, many variations are possible within the scope of the invention.

## Claims

1. Aircraft flat rear pressure bulkhead, having a layered stacking including:
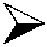 an airtight membrane (12),
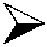 a honeycombed reinforcement grid (13),
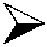 an interface (14) in between distributing grid (13) strain over membrane (12) surface.

2. Aircraft flat rear pressure bulkhead according to claim 1, wherein said honeycombed reinforcement grid (13) comprises at least 40 honeycombs (17), preferably at least 50 honeycombs (17).

3. Aircraft flat rear pressure bulkhead according to any preceding claim, wherein a largest dimension of most of, preferably of all of, honeycombs (17) of said honeycombed reinforcement grid (13), is less than 500mm, preferably less than 450mm.

4. Aircraft flat rear pressure bulkhead according to any preceding claim, wherein most of, preferably of all of, honeycombs (17) of said honeycombed reinforcement grid (13), are polygonal honeycombs (17) with at least six sides, are preferably hexagonal honeycombs (17).

5. Aircraft flat rear pressure bulkhead according to any preceding claim, wherein honeycomb walls (16) of said honeycombed reinforcement grid (13) are orthogonal to membrane (12) mean surface.

6. Aircraft flat rear pressure bulkhead according to any preceding claim, wherein said membrane (12) is flat and parallel to mean surface of flat rear pressure bulkhead.

7. Aircraft flat rear pressure bulkhead according to any preceding claim, wherein said interface (14) comprises, preferably is constituted of, flanges (14) distributing grid (13) strain over membrane (12) surface.

8. Aircraft flat rear pressure bulkhead according to claim 7, wherein said reinforcement grid (13) also comprises, on its rear face opposite to its front face contacting said interface, another layer of flanges (14) reinforcing honeycombs (17).

9. Aircraft flat rear pressure bulkhead according to claim 7 or 8, wherein said flanges (14) are flat and parallel to membrane (12) mean surface.

10. Aircraft flat rear pressure bulkhead according to claim 7 or 8, wherein said flanges (14) are tubes with axis parallel to membrane (12) mean surface.

11. Aircraft flat rear pressure bulkhead according to any preceding claim, wherein said interface (14) and said honeycombed reinforcement grid (13) are manufactured in one piece.

12. Aircraft flat rear pressure bulkhead according to claim 11, wherein a cross section (16) of said one piece layer is T shaped or I shaped or Y shaped.

13. Aircraft flat rear pressure bulkhead according to any preceding claim, wherein said flat rear pressure bulkhead is a disk.

14. Aircraft flat rear pressure bulkhead according to claim 13, wherein said layered stacking is encircled by a circular ring (15) to be fixed to aircraft fuselage attachments (8).

15. Aircraft flat rear pressure bulkhead according to any preceding claim, wherein said membrane (12) is a plastic membrane.

16. Aircraft flat rear pressure bulkhead according to any of claims 1 to 14, wherein said membrane (12) is a metallic membrane.

17. Aircraft flat rear pressure bulkhead according to any preceding claim, wherein said flat rear pressure bulkhead largest thickness is less than 400mm.

18. Aircraft flat rear pressure bulkhead, including:
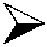 a honeycombed reinforcement grid (13),
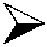 airtight membranes (19) respectively filling honeycombs (17) of said honeycombed reinforcement grid (13), said honeycombs (17) preferably being polygonal honeycombs (17) with at least six sides, and more preferably being hexagonal honeycombs (17).

19. Aircraft flat rear pressure bulkhead according to claim 18, wherein said honeycombed reinforcement grid (13) comprises at least 40 honeycombs (17), preferably at least 50 honeycombs (17).

20. Aircraft flat rear pressure bulkhead according to claim 18 or 19, wherein said airtight membranes (19) are dome shaped.

## Patentansprüche

1. Flache hintere Flugzeug-Drucktrennwand, welche eine geschichtete Stapelung aufweist, umfassend:
- eine luftdichte Membran (12),
- ein Bienenwaben-Verstärkungsgitter (13),
- eine Schnittstelle (14) inzwischen, die die Belastung des Verstärkungsgitter (13) über die Fläche der Membran (12) verteilt.

2. Flache hintere Flugzeug-Drucktrennwand nach Anspruch 1, wobei das Bienenwaben-Verstärkungsgitter (13) wenigstens 40 Bienenwaben (17), vorzugsweise wenigstens 50 Bienenwaben (17), umfasst.

3. Flache hintere Flugzeug-Drucktrennwand nach einem vorhergehenden Anspruch, wobei eine größte Abmessung der meisten, vorzugsweise von allen, Bienenwaben (17) des Bienenwaben-Verstärkungsgitters (13) geringer ist als 500 mm, vorzugsweise geringer als 450 mm.

4. Flache hintere Flugzeug-Drucktrennwand nach einem vorhergehenden Anspruch, wobei die meisten, vorzugsweise alle, Bienenwaben (17) des Bienenwaben-Verstärkungsgitters (13) polygone Bienenwaben (17) mit wenigstens sechs Seiten, vorzugsweise hexagonale Bienenwaben (17) sind.

5. Flache hintere Flugzeug-Drucktrennwand nach einem vorhergehenden Anspruch, wobei Bienenwaben-Wände (16) des Bienenwaben-Verstärkungsgitters (13) zu einer mittleren Fläche einer Membran (12) orthogonal sind.

6. Flache hintere Flugzeug-Drucktrennwand nach einem vorhergehenden Anspruch, wobei die Membran (12) flach und parallel zu einer mittleren Fläche der flachen hinteren Druckwand ist.

7. Flache hintere Flugzeug-Drucktrennwand nach einem vorhergehenden Anspruch, wobei die Schnittstelle (14) Flansche (14) umfasst, vorzugsweise daraus gebildet ist, welche die Belastung des Gitters (13) über die Fläche der Membran (12) verteilen.

8. Flache hintere Flugzeug-Drucktrennwand nach Anspruch 7, wobei das Verstärkungsgitter (13) an seiner hinteren Fläche, seiner vorderen Fläche entgegengesetzt, welche die Schnittstelle kontaktiert, auch eine andere Schicht von Flanschen (14) umfasst, welche Bienenwaben (17) verstärkt.

9. Flache hintere Flugzeug-Drucktrennwand nach Anspruch 7 oder 8, wobei die Flansche (14) flach und parallel zu einer mittleren Fläche einer Membran (12) sind.

10. Flache hintere Flugzeug-Drucktrennwand nach Anspruch 7 oder 8, wobei die Flansche (14) Röhren mit einer Achse sind, welche zu einer mittleren Fläche einer Membran (12) parallel ist.

11. Flache hintere Flugzeug-Drucktrennwand nach einem vorhergehenden Anspruch, wobei die Schnittstelle (14) und das Bienenwaben-Verstärkungsgitter (13) einstückig hergestellt sind.

12. Flache hintere Flugzeug-Drucktrennwand nach Anspruch 11, wobei ein Querschnitt (16) der einstückigen Schicht T-förmig oder I-förmig oder Y-förmig ist.

13. Flache hintere Flugzeug-Drucktrennwand nach einem vorhergehenden Anspruch, wobei die flache hintere Druckwand eine Scheibe ist.

14. Flache hintere Flugzeug-Drucktrennwand nach Anspruch 13, wobei die geschichtete Stapelung durch einen kreisförmigen Ring (15) eingeschlossen ist, welcher an Flugzeug-Sicherung-Anbringungen (8) zu befestigen ist.

15. Flache hintere Flugzeug-Drucktrennwand nach einem vorhergehenden Anspruch, wobei die Membran (12) eine Kunststoff-Membran ist.

16. Flache hintere Flugzeug-Drucktrennwand nach einem der Ansprüche 1 bis 14, wobei die Membran (12) eine Metall-Membran ist.

17. Flache hintere Flugzeug-Drucktrennwand nach einem vorhergehenden Anspruch, wobei eine größte Dicke der flachen hinteren Drucktrennwand geringer ist als 400 mm.

18. Flache hintere Flugzeug-Drucktrennwand, umfassend:
- ein Bienenwaben-Verstärkungsgitter (13),
- luftdichte Membrane (19), welche jeweils Bienenwaben (17) des Bienenwaben-Verstärkungsgitters (13) füllen, wobei die Bienenwaben (17) vorzugsweise polygone Bienenwaben (17) mit wenigstens sechs Seiten, und weiter bevorzugt hexagonale Bienenwaben (17) sind.

19. Flache hintere Flugzeug-Drucktrennwand nach Anspruch 18, wobei das Bienenwaben-Verstärkungsgitter (13) wenigstens 40 Bienenwaben (17), vorzugsweise wenigstens 50 Bienenwaben (17) umfasst.

20. Flache hintere Flugzeug-Drucktrennwand nach Anspruch 18 oder 19, wobei die luftdichten Membrane (19) kuppelförmig sind.

## Revendications

1. Cloison de pressurisation arrière plate pour aéronef, ayant un empilement en couches comportant :
- une membrane (12) étanche à l'air,
- une grille (13) de renfort en nids d'abeilles,
- une interface (14) entre les deux, répartissant la contrainte de la grille (13) sur la surface de la membrane (12).

2. Cloison de pressurisation arrière plate pour aéronef selon la revendication 1, dans laquelle ladite grille (13) de renfort en nids d'abeilles comprend au moins 40 nids d'abeilles (17), de préférence au moins 50 nids d'abeilles (17).

3. Cloison de pressurisation arrière plate pour aéronef selon l'une quelconque des revendications précédentes, dans laquelle une plus grande dimension de la plupart, de préférence de tous les nids d'abeilles (17) de ladite grille (13) de renfort en nids d'abeilles, est inférieure à 500 mm, de préférence inférieure à 450 mm.

4. Cloison de pressurisation arrière plate pour aéronef selon l'une quelconque des revendications précédentes, dans laquelle la plupart de, de préférence de tous les nids d'abeilles (17) de ladite grille (13) de renfort en nids d'abeilles, sont des nids d'abeilles (17) polygonaux avec au moins six côtés, sont de préférence des nids d'abeilles (17) hexagonaux.

5. Cloison de pressurisation arrière plate pour aéronef selon l'une quelconque des revendications précédentes, dans laquelle des parois (16) de nids d'abeilles de ladite grille (13) de renfort en nids d'abeilles sont orthogonales à une surface moyenne de membrane (12).

6. Cloison de pressurisation arrière plate pour aéronef selon l'une quelconque des revendications précédentes, dans laquelle ladite membrane (12) est plate et parallèle à une surface moyenne de cloison de pressurisation arrière plate.

7. Cloison de pressurisation arrière plate pour aéronef selon l'une quelconque des revendications précédentes, dans laquelle ladite interface (14) comprend, de préférence est constituée, des brides (14) répartissant la contrainte de la grille (13) sur la surface de la membrane (12).

8. Cloison de pressurisation arrière plate pour aéronef selon la revendication 7, dans laquelle ladite grille (13) de renfort comprend également, sur sa face arrière opposée à sa face avant en contact avec ladite interface, une autre couche de brides (14) renforçant les nids d'abeilles (17).

9. Cloison de pressurisation arrière plate pour aéronef selon la revendication 7 ou 8, dans laquelle lesdites brides (14) sont plates et parallèles à une surface moyenne de membrane (12).

10. Cloison de pressurisation arrière plate pour aéronef selon la revendication 7 ou 8, dans laquelle lesdites brides (14) sont des tubes ayant des axes parallèles à une surface moyenne de membrane (12).

11. Cloison de pressurisation arrière plate pour aéronef selon l'une quelconque des revendications précédentes, dans laquelle ladite interface (14) et ladite grille (13) de renfort en nids d'abeilles sont fabriquées en une seule pièce.

12. Cloison de pressurisation arrière plate pour aéronef selon la revendication 11, dans laquelle une section transversale (16) de ladite couche en une seule pièce est en forme de T ou en forme de I ou en forme de Y.

13. Cloison de pressurisation arrière plate pour aéronef selon l'une quelconque des revendications précédentes, dans laquelle ladite cloison de pressurisation arrière plate est un disque.

14. Cloison de pressurisation arrière plate pour aéronef selon la revendication 13, dans laquelle ledit empilement en couches est entouré d'un anneau circulaire (15) devant être attaché aux fixations de fuselage d'aéronef (8).

15. Cloison de pressurisation arrière plate pour aéronef selon l'une quelconque des revendications précédentes, dans laquelle ladite membrane (12) est une membrane en plastique.

16. Cloison de pressurisation arrière plate pour aéronef selon l'une quelconque des revendications 1 à 14, dans laquelle ladite membrane (12) est une membrane métallique.

17. Cloison de pressurisation arrière plate pour aéronef selon l'une quelconque des revendications précédentes, dans laquelle la plus grande épaisseur de ladite cloison de pressurisation arrière plate est inférieure à 400 mm.

18. Cloison de pressurisation arrière plate pour aéronef, comportant :
- une grille (13) de renfort en nids d'abeilles,
- des membranes étanches à l'air (19) remplissant respectivement des nids d'abeilles (17) de ladite grille (13) de renfort en nids d'abeilles, lesdits nids d'abeilles (17) étant de préférence des nids d'abeilles (17) polygonaux avec au moins six côtés, et de manière davantage préférée des nids d'abeilles (17) hexagonaux.

19. Cloison de pressurisation arrière plate pour aéronef selon la revendication 18, dans laquelle ladite grille (13) de renfort en nids d'abeilles comprend au moins 40 nids d'abeilles (17), de préférence au moins 50 nids d'abeilles (17).

20. Cloison de pressurisation arrière plate pour aéronef selon la revendication 18 ou 19, dans laquelle lesdites membranes étanches à l'air (19) sont en forme de dôme.
